# EUROPEAN PATENT APPLICATION

(11) **EP 4 776 605 A1**
(43) Date of publication of application: **15.07.2026**
(21) Application number: 24826852.6
(22) Date of filing: 19.11.2024
(51) Int. Cl.: H04L 69/40, H04W 24/04, H04W 88/08

(54) **PACKET TRANSMISSION METHOD AND APPARATUS, AND ELECTRONIC DEVICE**

(71) Applicant: New H3C Technologies Co., Ltd., Binjiang District Hangzhou Zhejiang 310052 (CN)
(72) Inventor: LI, Zhiyong, Beijing 100102 (CN); YANG, Peikun, Beijing 100102 (CN)
(74) Representative: 2SPL Patentanwälte PartG mbB
(86) International application number: PCT/CN2024/133026
(87) International publication number: WO 2026/107644

(57) **Abstract**

The present disclosure provides a packet transmission method and apparatus and an electronic device. The method includes: determining whether communication between an associated Access Point (AP) of an AP and a wireless terminal is abnormal; in response to a determination that the communication between the associated AP and the wireless terminal is abnormal, enabling a backup redundancy service, where a service identifier of the backup redundancy service is consistent with a service identifier of the associated AP; by the backup redundancy service, monitoring a first data packet sent by the wireless terminal to the associated AP and sending the first data packet to an Access Controller (AC); by the backup redundancy service, receiving a response data packet returned by the AC for the first data packet and sending the response data packet to the wireless terminal. In the technical solutions provided by the present disclosure, the network interruption of the wireless terminal and the transmission process interruption of the data packet can both be avoided, thereby maintaining the service uninterrupted.

## Description

### TECHNICAL FIELD

The present disclosure relates to the field of communication technologies, and in particular to a packet transmission method and apparatus and an electronic device.

### BACKGROUND

A Wireless Local Area Network (WLAN) may include an Access Controller (AC) and multiple Access Points (APs). In response to a determination that a wireless terminal is under the coverage of an AP (e.g., AP1), the wireless terminal can establish a wireless link with the AP1. The wireless terminal can send data packets to the AP1 through the wireless link and receive data packets from the AP1 through the wireless link. In response to a determination that the AP1 becomes abnormal and fails to provide services for the wireless terminal, the wireless terminal needs to reestablish a wireless link with another AP (e.g., AP2). Thus, the wireless terminal can send data packets to the AP2 through the reestablished wireless link and receive data packets from the AP2 through the reestablished wireless link.

### SUMMARY

The present disclosure provides a packet transmission method, which is applied to an Access Point (AP). The method includes:
determining whether communication between an associated AP of the AP and a wireless terminal is abnormal, where the associated AP is a monitored object of the AP;
enabling, in response to a determination that the communication between the associated AP and the wireless terminal is abnormal, a backup redundancy service, where a service identifier of the backup redundancy service is consistent with a service identifier of the associated AP;
by the backup redundancy service, monitoring a first data packet sent by the wireless terminal to the associated AP and sending the first data packet to an Access Controller (AC);
by the backup redundancy service, receiving a response data packet returned by the AC for the first data packet and sending the response data packet to the wireless terminal.

The present disclosure provides a packet transmission apparatus, which is applied to an Access Point (AP). The apparatus includes:
a determining module, configured to determine whether communication between an associated AP of the AP and a wireless terminal is abnormal, where the associated AP is a monitored object of the AP;
a processing module, configured to enable, in response to a determination that the communication between the associated AP and the wireless terminal is abnormal, a backup redundancy service, where a service identifier of the backup redundancy service is consistent with a service identifier of the associated AP;
a transmission module, configured to, by the backup redundancy service, monitor a first data packet sent by the wireless terminal to the associated AP and send the first data packet to an Access Controller (AC); and
by the backup redundancy service, receive a response data packet returned by the AC for the first data packet and send the response data packet to the wireless terminal.

The present disclosure provides an electronic device, including a processor and a machine-readable storage medium, where the machine-readable storage medium stores machine executable instructions executable by the processor; the processor is configured to execute the machine-executable instructions to perform the method in the above examples of the present disclosure.

The present disclosure provides a computer program product, including a computer program, where the computer program is executed by a processor to perform the packet transmission method in the above examples of the present disclosure.

The present disclosure provides a machine-readable storage medium, storing machine executable instructions executable by a processor; where the processor is configured to execute the machine executable instructions to perform the packet transmission method in the above examples of the present disclosure.

From the above technical solutions, it can be known that, in the embodiments of the present disclosure, in response to a determination that the communication between the associated AP of the AP and the wireless terminal is abnormal, the AP directly processes the data packet of the associated AP (i.e., the data packet sent by the wireless terminal to the associated AP), that is, sends the data packet to the AC, receives the response data packet returned by the AC, and sends the response data packet to the wireless terminal. In this case, the wireless terminal can continue accessing network resources without network interruption, avoiding the transmission process interruption of the data packet, and maintaining uninterrupted service, thereby enhancing user experience. By backing up access service (for example, the AP forms a backup redundancy service by backing up the access service of the associated AP) in the WLAN, it can be ensured that, after the accessing AP (e.g. associated AP) of the wireless terminal becomes abnormal, the AP supporting the backup redundancy service can provide services to the wireless terminal without differentiation, such that the wireless terminal can continue accessing the network resources without going off line, thereby ensuring high availability of the WLAN.

### BRIEF DESCRIPTION OF DRAWINGS

FIG. 1 is a schematic flowchart illustrating a packet transmission method according to an embodiment of the present disclosure.
FIG. 2A is a networking diagram illustrating a WLAN according to an embodiment of the present disclosure.
FIG. 2B is a schematic diagram of assigning adjacent APs into a same AP group according to an embodiment of the present disclosure.
FIG. 2C is a schematic diagram of creating a backup redundancy service at each AP according to an embodiment of the present disclosure.
FIG. 3 is a schematic flowchart illustrating a packet transmission method according to an embodiment of the present disclosure.
FIG. 4 is a schematic diagram of matching a data packet with a master service according to an embodiment of the present disclosure.
FIG. 5 is a schematic flowchart illustrating a packet transmission method according to an embodiment of the present disclosure.
FIG. 6 is a schematic diagram of matching a data packet with a backup redundancy service according to an embodiment of the present disclosure.
FIG. 7 is a structural schematic diagram illustrating a packet transmission apparatus according to an embodiment of the present disclosure.
FIG. 8 is a hardware structure diagram illustrating an electronic device according to an embodiment of the present disclosure.

### DETAILED DESCRIPTION

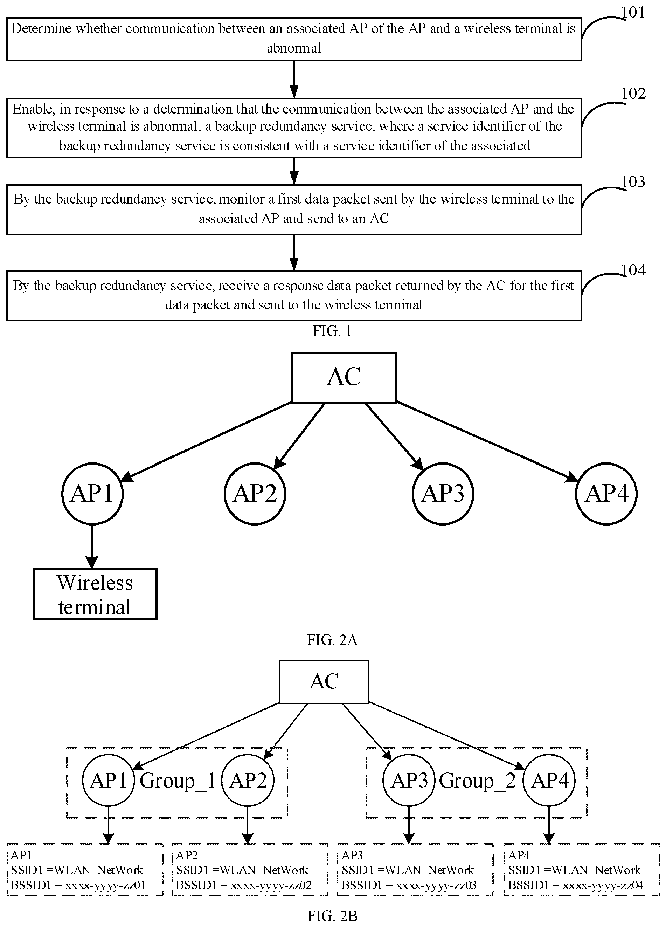

An embodiment of the present disclosure provides a packet transmission method, which is applied to an Access Point (AP) (i.e., any one AP in multiple APs). As shown in FIG. 1, it is a schematic flowchart illustrating the method. The method may include the following blocks.

At block 101, whether communication between an associated AP of the AP and a wireless terminal is abnormal is determined.

At block 102, in response to a determination that the communication between the associated AP and the wireless terminal is abnormal, a backup redundancy service is enabled, where a service identifier of the backup redundancy service is consistent with a service identifier of the associated AP.

At block 103, by the backup redundancy service, a first data packet sent by the wireless terminal to the associated AP is monitored and sent to an Access Controller (AC).

At block 104, by the backup redundancy service, a response data packet returned by the AC for the first data packet is received and sent to the wireless terminal.

In an example, the associated AP is a monitored object of the AP, and the AP can serve as a backup AP of the associated AP. In response to a determination that the communication between the associated AP and the wireless terminal is abnormal, the AP provides services to the wireless terminal in place of the associated AP.

In an example, determining whether the communication between the associated AP of the AP and the wireless terminal is abnormal may include: determining whether a response packet sent by the associated AP to the wireless terminal is monitored within a preset time length after the wireless terminal sends the first data packet to the associated AP; where the response packet includes at least one of: a response data packet, an Acknowledge (ACK) packet or a Block Acknowledge (BA) packet; in response to a determination that the response packet sent by the associated AP to the wireless terminal is monitored within the preset time length, determining that the communication between the associated AP and the wireless terminal is normal; in response to a determination that the response packet sent by the associated AP to the wireless terminal is not monitored within the preset time length, determining that the communication between the associated AP and the wireless terminal is abnormal.

In an example, determining whether the communication between the associated AP of the AP and the wireless terminal is abnormal may include: in response to a determination that a state anomaly message including the service identifier (i.e., the service identifier of the associated AP) is received from the AC, determining that the communication between the associated AP and the wireless terminal is abnormal; in response to a determination that the state anomaly message is not received, determining that the communication between the associated AP and the wireless terminal is normal; where the state anomaly message is sent by the AC when the AC detects that the associated AP is in an offline state, or sent by the AC when the AC detects that the associated AP is in a restarted state.

In an example, the AP may further support a master service with a service identifier consistent with a service identifier of the AP. Based on this, by the master service, a second data packet sent by the wireless terminal to the AP may be received and sent to the AC; by the master service, a response data packet returned by the AC for the second data packet may be received and sent to the wireless terminal.

In an example, before determining whether the communication between the associated AP of the AP and the wireless terminal is abnormal, in response to a determination that a creation message including the service identifier of the associated AP is received from the AC, the backup redundancy service may be created based on the service identifier of the associated AP (during a process of creating the backup redundancy service, the backup redundancy service is disabled, and in response to a determination that the communication between the associated AP and the wireless terminal is abnormal, the backup redundancy service is enabled); where the service identifier of the associated AP includes a Service Set Identifier (SSID) of the associated AP and a Basic Service Set Identifier (BSSID) of the associated AP; the BSSID of the associated AP includes a Medium Access Control (MAC) address of the associated AP.

In an example, after determining that the communication between the associated AP and the wireless terminal is abnormal, in response to a determination that a state recovery message including the service identifier of the associated AP is received from the AC, it is determined that the communication between the associated AP and the wireless terminal recovers to normal; and in response to a determination that the communication between the associated AP and the wireless terminal recovers to normal, the backup redundancy service is disabled; and the state recovery message is sent by the AC when the AC detects that the associated AP recovers to normal.

From the above technical solutions, it can be known that, in the embodiments of the present disclosure, in response to a determination that the communication between the associated AP of the AP and the wireless terminal is abnormal, the AP directly processes the data packet of the associated AP (i.e., the data packet sent by the wireless terminal to the associated AP), that is, sends the data packet to the AC, receives the response data packet returned by the AC, and sends the response data packet to the wireless terminal. In this case, the wireless terminal can continue accessing network resources, avoiding network interruptions of the wireless terminal and transmission process interruption of the data packet, and hence maintaining uninterrupted service, thereby enhancing user experience. By backing up access service (for example, the AP forms a backup redundancy service by backing up the access service of the associated AP) in the WLAN, it can be ensured that, after the accessing AP (e.g., associated AP) of the wireless terminal becomes abnormal, the AP supporting the backup redundancy service can provide services to the wireless terminal without differentiation, such that the wireless terminal can continue accessing the network resources without going off line, thereby ensuring high availability of the WLAN.

The technical solution of the embodiments of the present disclosure will be described below in combination with specific application scenarios.

As shown in FIG. 2A, it is a networking diagram of a WLAN. The WLAN may include an AC and multiple APs under the management of AC. In FIG. 2A, taking four APs as an example, which are respectively denoted as AP1, AP2, AP3 and AP4. For example, the AC may connect with respective APs through Power Over Ethernet (POE) switch or a switch of another type.

The wireless terminal (also called station, STA) may be a laptop computer and a smart phone and the like. The wireless terminal may be a terminal accessing the AP in a wireless manner and the type of the wireless terminal is not limited herein.

For multiple APs under the management of the AC, the AC can assign two adjacent APs into a same AP group, that is, the AP group can include two APs. With reference to FIG. 2B, it is a schematic diagram illustrating the AC assigning two adjacent APs into a same AP group. The AC can assign AP1 and AP2 into a same group 1 (denoted as Group_1), and the AC can assign AP3 and AP4 into a same AP group 2 (denoted as Group_2).

For each AP, the AP can create a master service (i.e., the AP supports the master service) with a service identifier being the service identifier of the AP. The service identifier of the AP may include an SSID of the AP and a BSSID of the AP, and the BSSID of the AP may include but not limited to an MAC address of the AP.

For example, as shown in FIG. 2B, the SSID of the AP1 is WLAN_NetWork, the BSSID of the AP1 is xxxx-yyyy-zz01. Therefore, the AP1 can create a master service with the service identifier including SSID1 and BSSID1, where the SSID1 is "WLAN_NetWork" and the BSSID1 is "xxxx-yyyy-zz01".

The SSID of the AP2 is WLAN_NetWork, and the BSSID of the AP2 is xxxx-yyyy-zz02. Therefore, the AP2 can create a master service with the service identifier including SSID1 and BSSID1, where the SSID1 is "WLAN_NetWork" and the BSSID1 is "xxxx-yyyy-zz02".

The SSID of the AP3 is WLAN_NetWork, and the BSSID of the AP3 is xxxx-yyyy-zz03. Therefore, the AP3 can create a master service with the service identifier including SSID1 and BSSID1, where the SSID1 is "WLAN_NetWork" and the BSSID1 is "xxxx-yyyy-zz03".

The SSID of the AP4 is WLAN_NetWork, and the BSSID of the AP4 is xxxx-yyyy-zz04. Therefore, the AP4 can create a master service with the service identifier including SSID1 and BSSID1, where the SSID1 is "WLAN_NetWork" and the BSSID1 is "xxxx-yyyy-zz04".

In an example, in response to a determination that the AC assign two adjacent APs into a same AP group, the two APs in the same AP group can satisfy the following conditions: the two APs have a same SSID for providing services but different BSSIDs for providing services. In response to a determination that the wireless terminal is under coverage of one AP, the other AP can also sense the wireless terminal, that is, can receive a data packet sent by the wireless terminal.

For example, in response to a determination that the AP1 and the AP2 are assigned into a same AP group, the SSID of the AP1 for providing services is same as the SSID of the AP2 for providing services, and the BSSID (e.g., the AMC address of the AP1) of the AP1 for providing services is different from the BSSID (e.g., the MAC address of the AP2) of the AP2 for providing services. In addition, in response to a determination that the wireless terminal is under coverage of the AP1, the AP2 also can sense the wireless terminal. In response to a determination that the wireless terminal is under coverage of the AP2, the AP1 also can sense the wireless terminal. Therefore, the AP1 can serve as an associated AP of the AP2, and the AP2 can serve as an associated AP of the AP1. In response to a determination that the AP3 and the AP4 are assigned into a same AP group, the SSID of the AP3 for providing services is same as the SSID of the AP4 for providing services, and the BSSID of the AP3 for providing services is different from the BSSID of the AP4 for providing services. In response to a determination that the wireless terminal is under coverage of the AP3, the AP4 also can sense the wireless terminal. In response to a determination that the wireless terminal is under coverage of the AP4, the AP3 also can sense the wireless terminal. Therefore, the AP3 can serve as an associated AP of the AP4, and the AP4 can serve as an associated AP of the AP3.

In this embodiment, for example, two adjacent APs are assigned into a same AP group, and more APs may be assigned into a same AP group as long as the multiple APs in the same AP group can satisfy the above conditions. For example, the AP1, AP2, AP3, and AP4 can be assigned into a same AP group; the AP1 provides a master service and the AP2, AP3 and AP4 all can monitor a data packet between the AP1 and the wireless terminal. The AP2, AP3 and AP4 can regularly obtain a signal strength of the AP1, and the signal strength determines a priority of making response in place of the AP1 at the time of abnormal communication of the AP1. For example, the signal strength of the AP1 obtained last by the AP2 is -30dB, the signal strength of the AP1 obtained last by the AP3 is -70dB, and the signal strength of the AP1 obtained last by the AP4 is -45dB. In this case, the priority of making response is AP2, AP4 and AP3. On this basis, in response to a determination that the AP2 detects that the communication between the AP1 and the wireless terminal is abnormal, the AP2 works in place of AP1, that is, the AP2 provides services to the wireless terminal. In response to a determination that the AP4 detects that the communication between the AP1 and the wireless terminal is abnormal and the communication between the AP2 and the wireless terminal is abnormal, the AP4 works in place of the AP1, that is, the AP4 provides services to the wireless terminal. In response to a determination that the AP3 detects that the communication between the AP1 and the wireless terminal is abnormal, the communication between the AP2 and the wireless terminal is abnormal and the communication between the AP4 and the wireless terminal is abnormal, the AP3 works in place of the AP1, that is, the AP3 provides services to the wireless terminal. For the process of each AP working in place of the AP1, reference can be made to the following embodiments.

In an example, in order to know whether two APs satisfy the condition "in response to a determination that the wireless terminal is under coverage of one AP, the other AP can also sense the wireless terminal", the following method can be adopted.

In response to a determination that the AC determines the signal strength of another AP (e.g., AP2) detected by one AP (e.g., AP1) is greater than a signal strength threshold (configured based on experience), it indicates that a distance between the AP1 and the AP2 is short and the above condition "in response to a determination that the wireless terminal is under coverage of one AP1, the other AP2 can also sense the wireless terminal" can be satisfied. Therefore, the AC can assign the AP1 and the AP2 into a same AP group. On the contrary, in response to a determination that the signal strength is not greater than the signal strength threshold, it indicates that the distance between the AP1 and the AP2 is far and the AC will not assign the AP1 and the AP2 into a same AP group.

For the signal strength of the AP2 detected by the AP1, a detection packet may be sent by the AP1 to the AP2, and the AP2 determines the signal strength of the detection packet, where the signal strength can be a signal strength measured by the AP2 upon receiving the detection packet. The AP2 sends the signal strength of the detection packet to the AC, and the AC uses the signal strength of the detection packet as the signal strength of the AP2 detected by the AP1. Alternatively, a detection packet may be sent to the AP1 by the AP2, and the AP1 determines the signal strength of the detection packet, where the signal strength can be a signal strength measured by the AP1 upon receiving the detection packet. The AP1 sends the signal strength of the detection packet to the AC and the AC uses the signal strength of the detection packet as the signal strength of the AP2 detected by the AP1.

From the above, it can be seen that, based on the signal strength of another AP detected by one AP, in combination with the SSID and BSSID of each AP for providing services, the AC can assign two adjacent APs into a same AP group.

In an example, for each AP, the AC can also send a creation message to the AP (for triggering the AP to create a backup redundancy service), where the creation message includes a service identifier of an associated AP of the AP. In response to a determination that the AP receives the creation message from the AC, the AP can, based on the service identifier of the associated AP, create a backup redundancy service (i.e., the AP can support the backup redundancy service; during a process of creating the backup redundancy service, the backup redundancy service is disabled; and the backup redundancy service is enabled only in response to a determination that the communication between the associated AP and the wireless terminal is abnormal). The service identifier of the backup redundancy service may be the service identifier of the associated AP.

For example, the service identifier of the associated AP may include the SSID of the associated AP and the BSSID of the associated AP, and the BSSID of the associated AP may include but not limited to the MAC address of the associated AP.

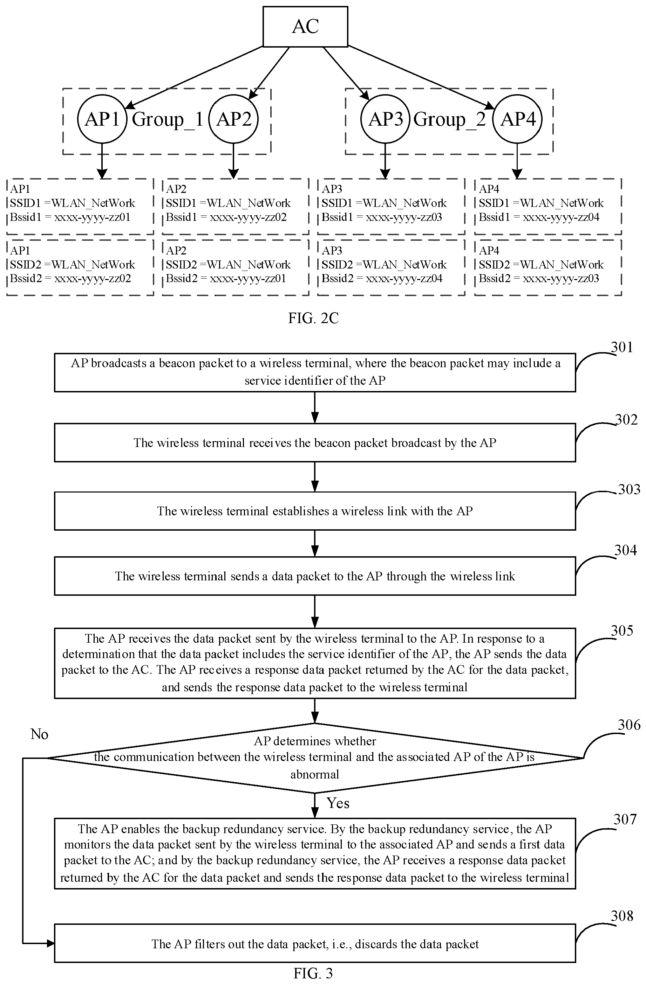

With reference to FIG. 2C, it is a schematic diagram illustrating the AC creating a backup redundancy service in each AP. The AC can obtain the service identifier of the AP1 and send a creation message to the AP2, where the creation message includes the service identifier of the associated AP (i.e., AP1) of the AP2. In response to a determination that the AP2 receives the creation message, the AP2 can create a backup redundancy service based on the service identifier of the associated AP1. Because the SSID of the AP1 is WLAN_NetWork and the BSSID of the AP1 is xxxx-yyyy-zz01, the AP2 can create the backup redundancy service with a service identifier including SSID2 and BSSID2, where the SSID2 is "WLAN_NetWork" and the BSSID2 is "xxxx-yyyy-zz01".

With reference to FIG. 2C, the AC can obtain the service identifier of the AP2 and sends a creation message to the AP1, where the creation message includes the service identifier of the associated AP (i.e., AP2) of the AP1. In response to a determination that the AP1 receives the creation message, the AP1 can create a backup redundancy service based on the service identifier of the associated AP2. Because the SSID of the AP2 is WLAN_NetWork and the BSSID of the AP2 is xxxx-yyyy-zz02, the AP1 can create the backup redundancy service with a service identifier including SSID2 and BSSID2, where the SSID2 is "WLAN_Network" and the BSSID2 is "xxxx-yyyy-zz02".

With reference to FIG. 2C, the AC can obtain the service identifier of the AP3 and sends a creation message to the AP4, where the creation message includes the service identifier of the associated AP (i.e., AP3) of the AP4. In response to a determination that the AP4 receives the creation message, the AP4 can create a backup redundancy service based on the service identifier of the associated AP3. Because the SSID of the AP3 is WLAN_NetWork and the BSSID of the AP3 is xxxx-yyyy-zz03, the AP4 can create the backup redundancy service with a service identifier including SSID2 and BSSID2, where the SSID2 is "WLAN_Network" and the BSSID2 is "xxxx-yyyy-zz03".

With reference to FIG. 2C, the AC can obtain the service identifier of the AP4 and sends a creation message to the AP3, where the creation message includes the service identifier of the associated AP (i.e., AP4) of the AP3. In response to a determination that the AP3 receives the creation message, the AP3 can create a backup redundancy service based on the service identifier of the associated AP4. Because the SSID of the AP4 is WLAN_NetWork and the BSSID of the AP4 is xxxx-yyyy-zz04, the AP3 can create the backup redundancy service with a service identifier including SSID2 and BSSID2, where the SSID2 is "WLAN_Network" and the BSSID2 is "xxxx-yyyy-zz04".

For each AP, the AP can support the master service and the backup redundancy service. The service identifier of the master service is the service identifier of the AP, namely, the SSID of the AP and the BSSID of the AP; the service identifier of the backup redundancy service is the service identifier of the associated AP of the AP, namely, the SSID of the associated AP and the BSSID of the associated AP. The master service of the AP is mainly configured to provide normal access service for the wireless terminal, that is, perform forwarding on data packet in response to a determination that the data packet is received from the wireless terminal. In response to a determination that the master service of the associated AP of the AP is normal (i.e. can provide normal access service for the wireless terminal), the backup redundancy service of the AP does not communicate with the wireless terminal. In response to a determination that the master service of the associated AP of the AP is abnormal (i.e., cannot provide normal access service for the wireless terminal), the backup redundancy service of the AP provides access service for the wireless terminal, that is, performs forwarding on the data packet in response to a determination that the data packet is received from the wireless terminal.

In the above application scenario, an embodiment of the present disclosure provides a packet transmission method. With reference to FIG. 3, it is a schematic flowchart illustrating the packet transmission method. The packet transmission method may include the following blocks.

At block 301, an AP broadcasts a beacon packet to a wireless terminal, where the beacon packet may include a service identifier of the AP, for example, the SSID of the AP and the BSSID of the AP.

For example, the AP1 broadcasts a beacon packet to the wireless terminal, and the beacon packet includes the SSID "WLAN_Network" of the AP1 and the BSSID "xxxx-yyyy-zz01" of the AP1. The AP2 broadcasts a beacon packet to the wireless terminal, and the beacon packet includes the SSID "WLAN_Network" of the AP2 and the BSSID "xxxx-yyyy-zz02" of the AP2. The AP3 broadcasts a beacon packet to the wireless terminal, and the beacon packet includes the SSID "WLAN_Network" of the AP3 and the BSSID "xxxx-yyyy-zz03" of the AP3. The AP4 broadcasts a beacon packet to the wireless terminal, and the beacon packet includes the SSID "WLAN_Network" of the AP4 and the BSSID "xxxx-yyyy-zz04" of the AP4.

At block 302, the wireless terminal receives the beacon packet broadcast by the AP.

In an example, in response to a determination that the wireless terminal receives the beacon packets broadcast by multiple APs, the wireless terminal can determine the signal strength of each beacon packet and only process the beacon packet with the largest signal strength and discard other beacon packets. For example, the wireless terminal receives the beacon packet broadcast by the AP1, the beacon packet broadcast by the AP2, the beacon packet broadcast by the AP3, and the beacon packet broadcast by the AP4, and the beacon packet broadcast by the AP1 has the largest signal strength. In this case, the wireless terminal can, based on the beacon packet broadcast by the AP1, perform subsequent processing (e.g., establish a wireless link and send data packet and the like), access the AP1 and discard other beacon packets.

At block 303, the wireless terminal establishes a wireless link with the AP.

For example, in response to a determination that the beacon packet broadcast by the AP1 has the largest signal strength, the wireless terminal accesses the AP1, that is, establishes a wireless link with the AP1. The establishing process of the wireless link is not limited herein. The wireless link can be a wireless link of WIFI type or a wireless link of another type.

At block 304, the wireless terminal sends a data packet to the AP through the wireless link.

For example, in response to a determination that the wireless terminal sends a data packet to the Internet, since the wireless terminal establishes the wireless link with the AP1, the wireless terminal can send the data packet to the AP1 through the wireless link.

For example, the communication between the AP1 and the wireless terminal is normal, that is, the AP1 can receive the data packet and can return a response data packet via the wireless link. On this basis, the following blocks can be performed.

At block 305, the AP receives the data packet sent by the wireless terminal to the AP. In response to a determination that the data packet includes the service identifier of the AP, the AP sends the data packet to the AC. The AP receives a response data packet returned by the AC for the data packet, and sends the response data packet to the wireless terminal.

For example, in response to a determination that the AP1 receives the data packet, since the wireless terminal establishes the wireless link with the AP1, the data packet includes the service identifier of the AP1, for example, the SSID "WLAN_Network" and the BSSID "xxxx-yyyy-zz01" rather than the service identifier of another AP. Because the service identifier included in the data packet is same as the service identifier of the master service of the AP1, the data packet matches the master service. In response to a determination that the data packet matches the master service, since the master service is configured to provide normal access service for the wireless terminal, the AP1 continues forwarding the data packet, for example, sends the data packet to the AC.

After receiving the data packet, the AC sends the data packet to the Internet. The AC receives a response data packet for the data packet, and the response data packet is sent by a device within the Internet to the wireless terminal. The AC sends the response data packet to the AP1, and the AP1 sends the response data packet to the wireless terminal through the wireless link.

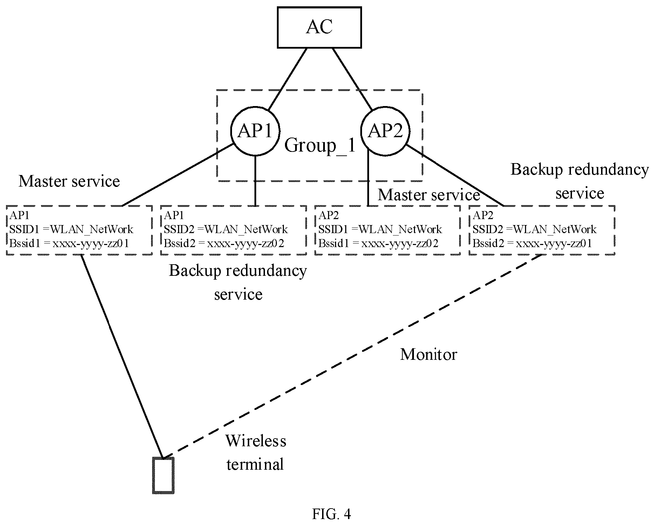

For example, with reference to FIG. 4, it is a schematic diagram of the data packet matching the master service of the AP1. In response to a determination that the wireless terminal sends the data packet to the AP1, the data packet includes the service identifier of the AP1, and the service identifier included in the data packet is same as the service identifier (for example, the SSID "WLAN_NetWork" and the BSSID "xxxx-yyyy-zz01") of the master service of the AP1. Therefore, the AP1 sends the data packet to the AC.

At block 306, the AP determines whether the communication between the wireless terminal and the associated AP of the AP is abnormal.

In response to a determination that the AP determines the communication between the wireless terminal and the associated AP is abnormal, block 307 is performed.

In response to a determination that the AP determines the communication between the wireless terminal and the associated AP is normal, block 308 is performed.

In an example, the block 306 and block 307 can be performed before the block 301 to block 305 or after the block 301 to block 305, or during the execution of block 301 to block 305, which is not limited herein in this embodiment.

At block 307, the AP enables the backup redundancy service. By the backup redundancy service, the AP monitors the data packet sent by the wireless terminal to the associated AP and sends a first data packet to the AC; and by the backup redundancy service, the AP receives a response data packet returned by the AC for the data packet and sends the response data packet to the wireless terminal.

In response to a determination that the communication between the associated AP and the wireless terminal is abnormal, the AP enables the backup redundancy service. In response to a determination that the backup redundancy service is enabled, the AP can monitor the data packet sent by the wireless terminal to the associated AP of the AP.

For example, although the wireless terminal sends the data packet to the AP1 through the wireless link, the wireless terminal is also under the coverage of other APs (e.g., AP2, AP3 and AP4). In this case, in response to a determination that the data packet is transmitted in the WLAN, other APs can also monitor the data packet sent by the wireless terminal to the AP1.

In response to a determination that the AP2 monitors the data packet, because the data packet includes the service identifier of the AP1, that is, the SSID "WLAN_Network" and the BSSID "xxxx-yyyy-zz01" and the service identifier included in the data packet is same as the service identifier of the backup redundancy service of the AP2, the data packet matches the backup redundancy service. In response to a determination that the data packet matches the backup redundancy service, the AP2 needs to know the state of the master service of the associated AP1 of the AP2. In response to a determination that the master service of the associated AP1 of the AP2 is normal (i.e., can provide normal access service for the wireless terminal), the backup redundancy service of the AP2 does not communicate with the wireless terminal, that is, the backup redundancy service of the AP2 is disabled. In response to a determination that the master service of the associated AP1 of the AP2 is abnormal (i.e., cannot provide normal access service for the wireless terminal), the backup redundancy service of the AP2 provides access service for the wireless terminal and the backup redundancy service of the AP2 is enabled. That is, in response to a determination that the communication between the associated AP1 and the wireless terminal is abnormal, the AP enables the backup redundancy service. On this basis, by the backup redundancy service, the AP2 monitor the data packet sent by the wireless terminal to the associated AP1. The AP2 sends the data packet to the AC; the AP2 receives a response data packet returned by the AC for the data packet and sends the response data pack to the wireless terminal.

For example, with reference to FIG. 4, it is a schematic diagram of the data packet matching the backup redundancy service of the AP2. In response to a determination that the wireless terminal sends the data packet to the AP1, the data packet may include the service identifier of the AP1, and the service identifier included in the data packet is same as the service identifier (e.g., the SSID "WLAN_NetWork" and the BSSID "xxxx-yyyy-zz01") of the backup redundancy service of the AP2. Therefore, the AP2 can, by the backup redundancy service, monitor the data packet sent by the wireless terminal to the associated AP1 of the AP2.

In response to a determination that the AP3 monitors the data packet, since the data packet includes the service identifier of the AP1 and the service identifier included in the data packet is different from the service identifier of the master service of the AP3, and different from the service identifier of the backup redundancy service of the AP3, the AP3 discards the data packet and no longer performs processing based on the data packet. Similarly, in response to a determination that the AP4 monitors the data packet, the AP4 discards the data packet and no longer performs processing based on the data packet.

In an example, in response to a determination that the AP2 monitors the data packet sent by the wireless terminal to the associated AP1, the data packet includes the service identifier of the associated AP1 of the AP2, that is, the service identifier included in the data packet is same as the service identifier of the backup redundancy service of the AP2, and the backup redundancy service is enabled. As a result, the communication between the associated AP1 of the AP2 and the wireless terminal is abnormal, the master service of the associated AP1 is abnormal, and the associated AP1 cannot provide normal access service for the wireless terminal. The AP2 is required to provide, in place of the associated AP1, normal access service for the wireless terminal. On this basis, the AP2 sends the data packet to the AC; the AP2 receives a response data packet returned by the AC for the data packet and sends the response data packet to the wireless terminal.

At block 308, the AP filters out the data packet, i.e., discards the data packet.

In the embodiment, taking the communication between the AP1 and the wireless terminal being normal as an example, that is, the AP1 sends a data packet to the AC, the communication between the associated AP and the wireless terminal is normal and the AP2 can filter out the data packet.

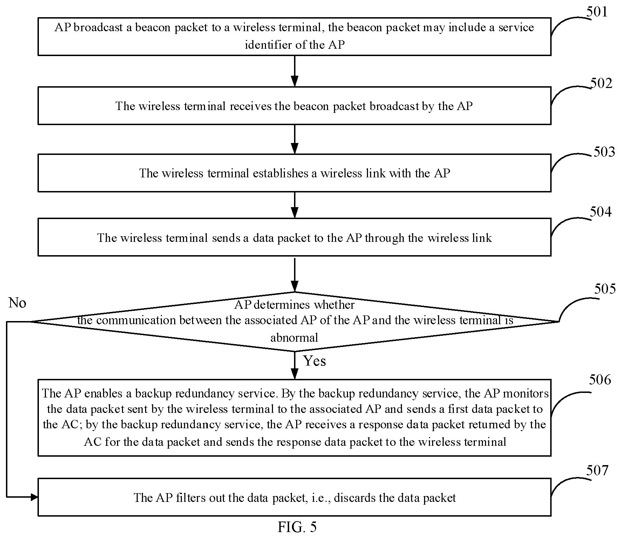

An embodiment of the present disclosure provides a packet transmission method. As shown in FIG. 5, the method may include the following blocks.

At block 501, an AP broadcast a beacon packet to a wireless terminal. The beacon packet may include a service identifier of the AP, for example, the SSID of the AP and the BSSID of the AP.

At block 502, the wireless terminal receives the beacon packet broadcast by the AP.

At block 503, the wireless terminal establishes a wireless link with the AP.

At block 504, the wireless terminal sends a data packet to the AP through the wireless link.

For block 501 to block 504, refer to the block 301 to block 304 and no redundant descriptions are made herein.

In the embodiment, in a case of abnormal communication, the AP cannot return a response data packet via the wireless link. On this basis, the following blocks can be performed.

At block 505, the AP determines whether the communication between the associated AP of the AP and the wireless terminal is abnormal.

In response to a determination that the AP determines the communication between the associated AP and the wireless terminal is abnormal, block 506 is performed.

In response to a determination that the AP determines the communication between the associated AP and the wireless terminal is normal, block 507 is performed.

In an example, the block 505 and block 506 can be performed before the block 501 to block 504 or after the block 501 to block 504, or during the execution of the block 501 to block 504, which is not limited in this embodiment.

At block 506, the AP enables a backup redundancy service. By the backup redundancy service, the AP monitors the data packet sent by the wireless terminal to the associated AP and sends a first data packet to the AC; by the backup redundancy service, the AP receives a response data packet returned by the AC for the data packet and sends the response data packet to the wireless terminal.

For example, in response to a determination that the communication between the associated AP1 and the wireless terminal is abnormal, the AP2 enables the backup redundancy service. In response to a determination that the backup redundancy service is enabled, the AP2 can, by the backup redundancy service, monitor the data packet sent by the wireless terminal to the associated AP1 of the AP2, where the data packet includes the service identifier of the associated AP1 of the AP2.

Then, the AP2 can send the data packet to the AC; the AP2 can receive a response data packet returned by the AC for the data packet and send the response data packet to the wireless terminal.

At block 507, the AP filters out the data packet, that is, discards the data packet.

For block 505 to block 507, refer to the block 306 to block 308 and no redundant descriptions are made herein.

In the embodiment, taking the communication between the AP1 and the wireless terminal being abnormal as an example, that is, the backup redundancy service is enabled. In response to a determination that the AP2 monitors the data packet, since the service identifier included in the data packet is same as the service identifier of the backup redundancy service of the AP2, and the backup redundancy service is enabled, the AP2 processes the data packet in place of the AP1, that is, the AP2 continues forwarding the data packet, for example, sends the data packet to the AC.

After the AC receives the data packet, the AC sends the data packet to the Internet. The AC receives a response data packet for the data packet, where the response data packet is sent by a device within the Internet to the wireless terminal. The AC sends the response data packet to the AP2, and the AP2 sends the response data packet to the wireless terminal.

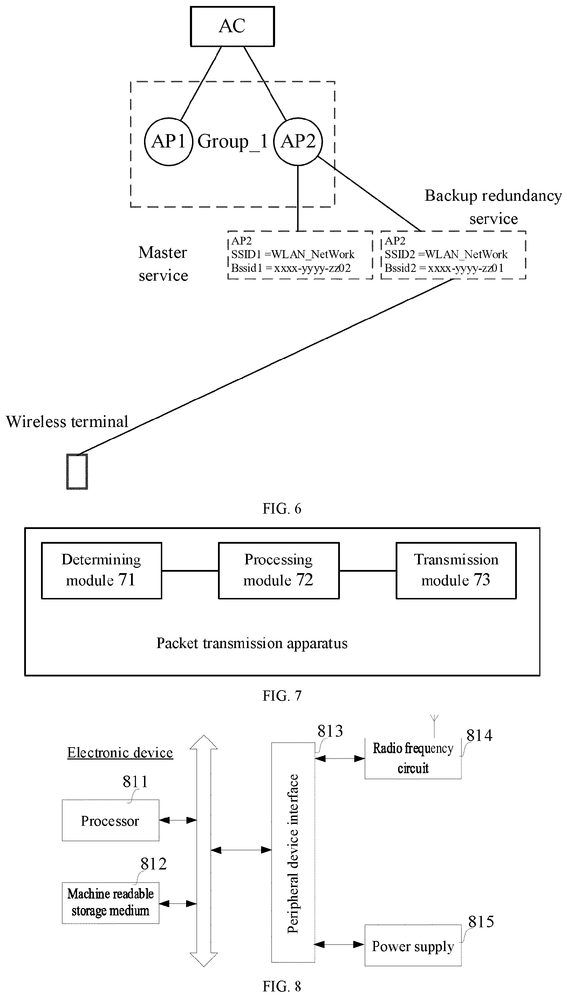

With reference to FIG. 6, it is a schematic diagram of the data packet matching the backup redundancy service of the AP2. In response to a determination that the wireless terminal sends the data packet to the AP1, the data packet includes the service identifier of the AP1 and the service identifier included in the data packet is same as the service identifier (e.g., the SSID "WLAN_Network" and the BSSID "xxxx-yyyy-zz01") of the backup redundancy service of the AP2. Thus, the AP2 sends the data packet to the AC.

In an example, the AP can determine the communication state (e.g., abnormal communication or normal communication) between the associated AP of the AP and the wireless terminal, and then determine whether the backup redundancy service supported by the AP is enabled. In order to determine the communication state between the associated AP of the AP and the wireless terminal, the following manners can be carried out.

Manner 1: in response to a determination that the AP receives a state anomaly message including the service identifier of the associated AP of the AP from the AC, the AP determines the communication between the associated AP and the wireless terminal is abnormal. In response to a determination that the AP does not receive the state anomaly message, the AP determines the communication between the associated AP and the wireless terminal is normal.

The state anomaly message may be sent by the AC when the AC detects that the associated AP is in an offline state, or sent by the AC when the AC detects that the associated AP is in a restarted state.

For example, the AC can detect the state of each AP. In response to detecting that an AP (e.g., AP1) is in an offline state or a restarted state, the AC can send a state anomaly message to the associated AP2 (the other AP in the same AP group) of the AP1. In response to a determination that the AP1 is in an offline state or a restarted state, it indicates that the communication between the AP1 and the wireless terminal is abnormal, and the AP1 cannot continue providing access service for the wireless terminal.

In response to a determination that the AC sends the state anomaly message to the associated AP2 of the AP1, the state anomaly message can include the service identifier of the AP1 which indicates the AP1 is in an offline state or a restarted state.

In response to a determination that the AP2 receives the state anomaly message, since the service identifier included in the state anomaly message is same as the service identifier of the backup redundancy service, the AP2 determines the communication between the associated AP1 of the AP2 and the wireless terminal is abnormal, and needs to enable the backup redundancy service to provide services for the wireless terminal in place of the AP1.

In response to a determination that the AP2 does not receive the state anomaly message, the AP2 determines the communication between the associated AP1 of the AP2 and the wireless terminal is normal, and does not need to enable the backup redundancy service to provide services for the wireless terminal in place of the AP1.

Manner 2: each time the AP monitors the data packet (the service identifier included in the data packet is same as the service identifier of the backup redundancy service of the AP) sent by the wireless terminal to the associated AP, the AP determines whether a response packet sent by the associated AP to the wireless terminal is monitored within a preset time length after the wireless terminal sends the data packet to the associated AP; if yes, the AP determines the communication between the associated AP and the wireless terminal is normal; if not, the AP determines the communication between the associated AP and the wireless terminal is abnormal.

For example, each time the AP monitors the data packet sent by the wireless terminal to the associated AP, a timer may be enabled for this data packet. The timeout length of the timer may be configured based on experience, and the timeout length of the timer is referred to as a preset time length. Assuming that the AP receives a data packet from the wireless terminal, the AP may return a response packet to the wireless terminal within a time length K, in this case, the preset time length may be greater than or equal to the time length K.

The AP can monitor a data packet sent by the associated AP to the wireless terminal, and determine whether a response packet is monitored. In response to a determination that the AP monitors the response packet sent by the associated AP to the wireless terminal before the timer expires, the AP determines the communication between the associated AP and the wireless terminal is normal. In response to a determination that the AP fails to monitor the response packet sent by the associated AP to the wireless terminal when the timer expires, the AP determines the communication between the associated AP and the wireless terminal is abnormal.

The response packet may include but not limited to at least one of: a response data packet, an ACK packet or a BA packet, which are only exemplified for the response packet and will not be limited herein. In response to a determination that the AP monitors the response data packet sent by the associated AP to the wireless terminal, the AP determines the communication between the associated AP and the wireless terminal is normal. In response to a determination that the AP monitors the ACK packet sent by the associated AP to the wireless terminal, the AP determines the communication between the associated AP and the wireless terminal is normal. In response to a determination that the AP monitors the BA packet sent by the associated AP to the wireless terminal, the AP determines the communication between the associated AP and the wireless terminal is normal. In response to a determination that the AP does not monitor the response data packet, the ACK packet and the BA packet sent by the associated AP to the wireless terminal, the AP determines the communication between the associated AP and the wireless terminal is abnormal.

For the response data packet, after the associated AP receives a data packet from the wireless terminal, the associated AP sends the data packet to the AC, and then the AC sends the data packet to the Internet. The AC receives a response data packet for the data packet and sends the response data packet to the associated AP, and then the associated AP sends the response data packet to the wireless terminal. In this way, the AP can monitor the response data packet sent by the associated AP to the wireless terminal.

For the ACK packet, after the associated AP receives a data packet from the wireless terminal, the associated AP sends an ACK packet to the wireless terminal to indicate by the ACK packet that the associated AP already successfully receives the data packet. In this way, the AP can monitor the ACK packet sent by the associated AP to the wireless terminal.

For the BA packet, after the associated AP receives a data packet from the wireless terminal, the associated AP sends an BA packet to the wireless terminal to indicate by the BA packet that which data frames of the wireless terminal have been correctly received (i.e., the data packet sent by the wireless terminal includes multiple data frames, and the BA packet indicates that which data frames are correctly received). In this way, the AP can monitor the BA packet sent by the associated AP to the wireless terminal.

To sum up, based on the manner 1 or manner 2, the AP can determine the communication state between the associated AP of the AP and the wireless terminal. In response to a determination that the communication between the associated AP and the wireless terminal is normal, the AP can disable the backup redundancy service, that is, it is not required to provide services for the wireless terminal in place of the associated AP. In response to a determination that the communication between the associated AP and the wireless terminal is abnormal, the AP can enable the backup redundancy service, that is, it is required to provide services for the wireless terminal in place of the associated AP.

In an example, a service flag of the backup redundancy service can be pre-maintained, and the service flag may be a first value or a second value. The first value indicates that the backup redundancy service is disabled and the second value indicates that the backup redundancy service is enabled. The first value is 1 and the second value is 0, or the first value is 0 and the second value is 1. Therefore, based on the manner 1 or manner 2, in response to determining that the communication between the associated AP and the wireless terminal is normal, the AP may set the service flag of the backup redundancy service to the first value; in response to determining that the communication between the associated AP and the wireless terminal is abnormal, the AP may set the service flag of the backup redundancy service to the second value. On this basis, in the block 306 or block 505, the AP may directly query for the service flag of the backup redundancy service. In response to a determination that the service flag of the backup redundancy service is the first value, the AP can directly determine the communication between the associated AP and the wireless terminal is normal; in response to a determination that the service flag of the backup redundancy service is the second value, the AP can directly determine the communication between the associated AP and the wireless terminal is abnormal.

In an example, after determining that the communication between the associated AP and the wireless terminal is abnormal, in response to a determination that the AP receives a state recovery message including the service identifier of the associated AP from the AC, the AP may determine the communication between the associated AP and the wireless terminal is recovered to normal, and disable the backup redundancy service. The state recovery message is sent by the AC when the AC detects that the associated AP recovers to normal.

On this basis, in the block 306 or the block 505, in response to a determination that the AP determines whether the communication between the associated AP of the AP and the wireless terminal is abnormal, the communication between the associated AP and the wireless terminal is normal. Therefore, in response to a determination that the AP monitors the data packet sent by the wireless terminal to the associated AP, the AP can filter out the data packet without forwarding the data packet.

Since the communication between the associated AP and the wireless terminal recovers to normal, the associated AP may, in response to a determination that a data packet is received, send the data packet to the AC, this process can be shown in the block 305.

After determining that the communication between the AP1 and the wireless terminal is abnormal, the AC may detect the state of the AP1. In response to detecting that the AP1 recovers to normal, for example, the AP1 is in an online state or a state of restart completion, the AC can send a state recovery state to the associated AP2 (i.e., the other AP in the same AP group) of the AP1. In response to a determination that the AP1 recovers to normal, it indicates that the communication between the AP1 and the wireless terminal is normal, and the AP1 can continue providing access service for the wireless terminal. The state recovery message may include the service identifier of the AP1 to indicate the AP1 recovers to normal.

In response to a determination that the AP2 receives the state recovery message, because the service identifier included in the state recovery message is same as the service identifier of the backup redundancy service, the AP2 determines the communication between the associated AP1 of the AP2 and the wireless terminal is recovered to normal, and it is required to disable the backup redundancy service without providing access service for the wireless terminal in place of the AP1.

From the above technical solutions, it can be seen that, in the embodiments of the present disclosure, in response to a determination that the communication between the associated AP of the AP and the wireless terminal is abnormal, the AP can directly process the data packet of the associated AP. In this case, the wireless terminal can continue accessing network resources without network interruption, avoiding transmission process interruption of the data packet, and hence maintaining uninterrupted service, thereby enhancing user experience. By backing up access service in the WLAN to form mutual backup of the AP access service, it can be ensured that, after the accessing AP of the wireless terminal becomes abnormal, the AP supporting the backup redundancy service can provide services to the wireless terminal without differentiation, such that the wireless terminal can continue accessing the network resources without going off line, thereby ensuring high availability of the WLAN, and solving the problem of network access interruption of the wireless terminal after the accessing AP is abnormal. Thus, WLAN high availability based on multi-AP collaboration can be realized. High availability refers to the ability to continue to maintain services when the device hardware fails.

Based on the same idea as the above method, an embodiment of the present disclosure provides a packet transmission apparatus, which is applied to an Access Point (AP). With reference to FIG. 7, it is a structural schematic diagram of the apparatus. The apparatus includes:
**a** determining module 71, configured to determine whether communication between an associated AP of the AP and a wireless terminal is abnormal;
a processing module 72, configured to enable, in response to a determination that the communication between the associated AP and the wireless terminal is abnormal, a backup redundancy service, where a service identifier of the backup redundancy service is consistent with a service identifier of the associated AP;
a transmission module 73, configured to, by the backup redundancy service, monitor a first data packet sent by the wireless terminal to the associated AP and send the first data packet to an Access Controller (AC); and,
**by** the backup redundancy service, receive a response data packet returned by the AC for the first data packet and send the response data packet to the wireless terminal.

In an example, in response to a determination that determining whether the communication between the associated AP of the AP and the wireless terminal is abnormal, the determining module 71 is specifically configured to: determine whether a response packet sent by the associated AP to the wireless terminal is monitored within a preset time length after the wireless terminal sends the first data packet to the associated AP; where the response packet includes at least one of: a response data packet, an Acknowledge (ACK) packet or a Block Acknowledge (BA) packet; in response to a determination that the response packet sent by the associated AP to the wireless terminal is monitored within the preset time length, determine that the communication between the associated AP and the wireless terminal is normal;
in response to a determination that the response packet sent by the associated AP to the wireless terminal is not monitored within the preset time length, determine that the communication between the associated AP and the wireless terminal is abnormal.

In an example, in response to a determination that determining whether the communication between the associated AP of the AP and the wireless terminal is abnormal, the determining module 71 is specifically configured to: in response to a determination that a state anomaly message including the service identifier is received from the AC, determine that the communication between the associated AP and the wireless terminal is abnormal; in response to a determination that the state anomaly message is not received, determine that the communication between the associated AP and the wireless terminal is normal;
where the state anomaly message is sent by the AC when the AC detects that the associated AP is in an offline state, or sent by the AC when the AC detects that the associated AP is in a restarted state.

In an example, the transmission module 72 is further configured to, by a master service supported by the AP, receive a second data packet sent by the wireless terminal to the AP and send the second data packet to the AC; by the master service, receive a response data packet returned by the AC for the second data packet and send the response data packet to the wireless terminal; where the master service has a service identifier consistent with the service identifier of the AP.

In an example, the processing module 72 is further configured to, in response to a determination that a creation message including the service identifier of the associated AP is received from the AC, create the backup redundancy service based on the service identifier of the associated AP; where the service identifier of the associated AP includes a service set identifier (SSID) of the associated AP and a basic service set identifier (BSSID) of the associated AP; the BSSID of the associated AP includes a Medium Access Control (MAC) address of the associated AP.

In an example, the determining module 71 is further configured to, after determining that the communication between the associated AP and the wireless terminal is abnormal, in response to a determination that a state recovery message including the service identifier of the associated AP is received from the AC, determine that the communication between the associated AP and the wireless terminal recovers to normal; and
the processing module 72 is further configured to disable, in response to a determination that the communication between the associated AP and the wireless terminal recovers to normal, the backup redundancy service;
where the state recovery message is sent by the AC when the AC detects that the associated AP recovers to normal.

Based on the same idea as the above method, an embodiment of the present disclosure provides an electronic device. With reference to FIG. 8, the electronic device includes a processor 811 and a machine-readable storage medium 812; the machine-readable storage medium 812 stores machine executable instructions executable by the processor 811; the processor 811 is configured to execute the machine executable instructions to perform the packet transmission method in any of the above examples.

In an example, the processor 811 may include one or more processing cores such as 4-core processor, 8-core processor and the like. The processor 811 may be implemented by at least one hardware form of Digital Signal Processing (DSP), Field-Programmable Gate Array (FPGA), or Programmable Logic Array (PLA).

The processor 811 can further include a main processor and a coprocessor. The main processor is a processor configured to process data in waked-up state, which is also referred to as Central Processing Unit (CPU). The coprocessor is a low-power processor configured to process data in a standby state.

In some embodiments, the processor 811 may be integrated with a Graphics Processing Unit (GPU) configured to be in charge of rendering and painting of the contents to be displayed on a display screen.

In an example, the electronic device may optionally include: a peripheral device interface 813 and at least one peripheral device. The processor 811 may be connected with the peripheral device interface 813 via bus or signal. Each peripheral device may be connected with the peripheral device interface 813 via a bus, a signal line or a circuit board. For example, the peripheral device may include at least one of: a radio frequency circuit 814 or a power supply 815.

The radio frequency circuit 814 is configured to receive and send a Radio Frequency (RF) signal also referred to as electromagnetic signal. The radio frequency circuit 814 communicates with a communication network or other communication device via the electromagnetic signal. The radio frequency circuit 814 converts an electrical signal into an electromagnetic signal for transmission or converts a received electromagnetic signal into an electrical signal. In some embodiments, the radio frequency circuit 814 includes: an antenna system, an RF transceiver, one or more amplifiers, a tuner, an oscillator, a digital signal processor and a user identity module card and the like.

The radio frequency circuit 814 may communicate with the wireless terminal based on at least one wireless communication protocol. The wireless communication protocol includes but not limited to: World Wide Web, metropolitan area network, intranet, mobile communication network of each generation (2G, 3G, 4G, and 5G), WLAN, and/or Wireless Fidelity (WIFI) network.

The power supply 815 is configured to supply power to each component in the electronic device. The power supply 815 may be alternating current, direct current, disposable battery or chargeable battery. The type of the power supply 815 is not limited herein.

Based on the same application idea as the above method, an embodiment of the present disclosure provides a machine-readable storage medium, storing plural computer instructions. The computer instructions are executed by a processor to perform the packet transmission method in any of the above examples. The machine-readable storage medium mentioned herein may be any of electronic, magnetic, optical or other physical storage devices and may contain or store information such as executable instructions, data and so on. For example, the machine-readable storage medium may be a random-access memory (RAM), a volatile memory, a non-volatile memory, a flash memory, a storage drive (e.g. hard disk drive), a solid-state hard disk, any type of storage disk (e.g., compact disk, Digital Video Disk (DVD)), or a similar storage medium, or a combination thereof.

Based on the same application idea as the above method, an embodiment of the present disclosure further provides a computer program product, which includes computer programs; where the computer programs are executed by a processor to perform the packet transmission method in any of the above examples.

Those skilled in the arts should understand that the embodiments of the present disclosure may be provided as methods, systems, or computer program products. Therefore, the present disclosure may take the form of a pure hardware embodiment, a pure software embodiment, or an embodiment combining software and hardware. Furthermore, the embodiments of the present disclosure may take the form of a computer program product implemented on one or more computer available storage mediums (including but not limited to disk memories, CD-ROM, optical storage devices, etc.) containing computer available program codes.

The foregoing descriptions are only embodiments of the present disclosure but not intended to limit the present disclosure. For the persons skilled in the art, various modifications and changes may be made to the present disclosure. Any modifications, equivalent substitutions, and improvements made within the spirit and principles of the disclosure shall be encompassed in the scope of protection of the present disclosure.

## Claims

1. A packet transmission method, applied to an Access Point, AP, and comprising:
determining whether communication between an associated AP of the AP and a wireless terminal is abnormal, wherein the associated AP is a monitored object of the AP;
enabling, in response to a determination that the communication between the associated AP and the wireless terminal is abnormal, a backup redundancy service, wherein a service identifier of the backup redundancy service is consistent with a service identifier of the associated AP;
by the backup redundancy service, monitoring a first data packet sent by the wireless terminal to the associated AP and sending the first data packet to an Access Controller, AC; and
by the backup redundancy service, receiving a response data packet returned by the AC for the first data packet and sending the response data packet to the wireless terminal.

2. The method of claim 1, wherein,
determining whether the communication between the associated AP of the AP and the wireless terminal is abnormal comprises:
determining whether a response packet sent by the associated AP to the wireless terminal is monitored within a preset time length after the wireless terminal sends the first data packet to the associated AP; wherein the response packet comprises at least one of: a response data packet, an Acknowledge, ACK, packet or a Block Acknowledge, BA, packet;
determining, in response to a determination that the response packet sent by the associated AP to the wireless terminal is monitored within the preset time length, that the communication between the associated AP and the wireless terminal is normal; and
determining, in response to a determination that the response packet sent by the associated AP to the wireless terminal is not monitored within the preset time length, that the communication between the associated AP and the wireless terminal is abnormal.

3. The method of claim 1, wherein,
determining whether the communication between the associated AP of the AP and the wireless terminal is abnormal comprises:
determining, in response to a determination that a state anomaly message comprising the service identifier is received from the AC, that the communication between the associated AP and the wireless terminal is abnormal;
determining, in response to a determination that the state anomaly message is not received, that the communication between the associated AP and the wireless terminal is normal; and
wherein the state anomaly message is sent by the AC when the AC detects that the associated AP is in an offline state, or sent by the AC when the AC detects that the associated AP is in a restarted state.

4. The method of claim 1, wherein the AP supports a master service with a service identifier consistent with a service identifier of the AP, and the method further comprises:
by the master service, receiving a second data packet sent by the wireless terminal to the AP and sending the second data packet to the AC; and
by the master service, receiving a response data packet returned by the AC for the second data packet and sending the response data packet to the wireless terminal.

5. The method of claim 1, wherein before determining whether the communication between the associated AP of the AP and the wireless terminal is abnormal, the method further comprises:
creating, in response to a determination that a creation message comprising the service identifier of the associated AP is received from the AC, the backup redundancy service based on the service identifier of the associated AP;
wherein the service identifier of the associated AP comprises a service set identifier, SSID, of the associated AP and a basic service set identifier, BSSID, of the associated AP; and
wherein the BSSID of the associated AP comprises a Medium Access Control, MAC, address of the associated AP.

6. The method of claim 1, wherein,
after determining that the communication between the associated AP and the wireless terminal is abnormal, the method further comprises:
in response to a determination that a state recovery message comprising the service identifier of the associated AP is received from the AC, determining that the communication between the associated AP and the wireless terminal recovers to normal and disabling the backup redundancy service; and
wherein the state recovery message is sent by the AC when the AC detects that the associated AP recovers to normal.

7. A packet transmission apparatus, applied to an Access Point, AP, and comprising:
a determining module, configured to determine whether communication between an associated AP of the AP and a wireless terminal is abnormal, wherein the associated AP is a monitored object of the AP;
a processing module, configured to enable, in response to a determination that the communication between the associated AP and the wireless terminal is abnormal, a backup redundancy service, wherein a service identifier of the backup redundancy service is consistent with a service identifier of the associated AP; and
a transmission module, configured to, by the backup redundancy service, monitor a first data packet sent by the wireless terminal to the associated AP and send the first data packet to an Access Controller, AC; and
by the backup redundancy service, receive a response data packet returned by the AC for the first data packet and send the response data packet to the wireless terminal.

8. The apparatus of claim 7, wherein in response to a determination that determining whether the communication between the associated AP of the AP and the wireless terminal is abnormal, the determining module is configured to:
determine whether a response packet sent by the associated AP to the wireless terminal is monitored within a preset time length after the wireless terminal sends the first data packet to the associated AP; wherein the response packet comprises at least one of a response data packet, an Acknowledge, ACK, packet or a Block Acknowledge, BA, packet;
determine, in response to a determination that the response packet sent by the associated AP to the wireless terminal is monitored within the preset time length, that the communication between the associated AP and the wireless terminal is normal; and
determine, in response to a determination that the response packet sent by the associated AP to the wireless terminal is not monitored within the preset time length, that the communication between the associated AP and the wireless terminal is abnormal.

9. The apparatus of claim 7, wherein in response to a determination that determining whether the communication between the associated AP of the AP and the wireless terminal is abnormal, the determining module is configured to:
determine, in response to a determination that a state anomaly message comprising the service identifier is received from the AC, that the communication between the associated AP and the wireless terminal is abnormal; and
determine, in response to a determination that the state anomaly message is not received, that the communication between the associated AP and the wireless terminal is normal;
wherein the state anomaly message is sent by the AC when the AC detects that the associated AP is in an offline state, or sent by the AC when the AC detects that the associated AP is in a restarted state.

10. The apparatus of claim 7, wherein,
the transmission module is further configured to:
by a master service supported by the AP, receive a second data packet sent by the wireless terminal to the AP and send the second data packet to the AC; and
by the master service, receive a response data packet returned by the AC for the second data packet and send the response data packet to the wireless terminal; wherein the master service has a service identifier consistent with the service identifier of the AP.

11. The apparatus of claim 7, wherein,
the processing module is further configured to create, in response to a determination that a creation message comprising the service identifier of the associated AP is received from the AC, the backup redundancy service based on the service identifier of the associated AP;
wherein the service identifier of the associated AP comprises a service set identifier, SSID, of the associated AP and a basic service set identifier, BSSID, of the associated AP; and
wherein the BSSID of the associated AP comprises a Medium Access Control, MAC, address of the associated AP.

12. The apparatus of claim 7, wherein,
the determining module is further configured to determine, after determining that the communication between the associated AP and the wireless terminal is abnormal, in response to a determination that a state recovery message comprising the service identifier of the associated AP is received from the AC, that the communication between the associated AP and the wireless terminal recovers to normal; and
the processing module is further configured to disable, in response to a determination that the communication between the associated AP and the wireless terminal recovers to normal, the backup redundancy service;
wherein the state recovery message is sent by the AC when the AC detects that the associated AP recovers to normal.

13. An electronic device, comprising a processor and a machine-readable storage medium, wherein the machine-readable storage medium stores machine executable instructions executable by the processor; the processor is configured to execute the machine-executable instructions to perform the method of any one of claims 1 to 6.
